# FASCICULE DE BREVET EUROPEEN

(11) **EP 1 348 867 B1**
(45) Date de publication et mention de la délivrance du brevet: **29.09.2004**
(21) Numéro de dépôt: 03290708.1
(22) Date de dépôt: 20.03.2003
(51) Int. Cl.: F03D 11/04, B63B 21/50

(54) **Installation de production éolienne d'électricité en mer, ainsi que procédé de construction et de mise en place d'une telle installation**
Offshore-Windenergiekraftwerk, sowie Verfahren zum Aufbau und Errichtung dieses Kraftwerks
Offshore wind-power plant as well as construction and erection method for such a plant

(30) Priorité: 22.03.2002 FR 0203622
(43) Date de publication de la demande: 01.10.2003
(73) Titulaire: DORIS ENGINEERING, F-75013 Paris (FR)
(72) Inventeur: Foglia , Vincent Frédéric Paul, 93600 Aulnay sous Bois (FR); Deleuil, Georges, 75015 Paris (FR); Michel, Dominique, 75008 Paris (FR)
(74) Mandataire: Colas, Jean-Pierre

(56) Documents cités:
- EP-A- 1 174 336
- WO-A-02/10589
- FR-A- 2 507 146

## Description

La présente invention est relative à une installation de production d'électricité en mer et, plus particulièrement, à une telle installation constituée d'une éolienne et d'un support pour cette éolienne.

On connaît du document WO 02/10589 une installation de production d'électricité en mer, comprenant une éolienne et un support pour cette éolienne, ledit support étant constitué par une plate-forme à lignes tendues, ladite plate-forme prenant la forme d'un flotteur ballastable et déballastable. FR 2 507 146 décrit une installation similaire, la plate-forme comprenant trois flotteurs reliés en triangle. L'ancrage y est également fixe.

Cette installation de la technique antérieure présente une structure complexe, et sa mise en place est relativement coûteuse.

La présente invention a notamment pour but de supprimer cet inconvénient.

On atteint ce but de l'invention avec une installation de production d'électricité en mer, comprenant une éolienne et un support pour cette éolienne, ledit support étant constitué par une plate-forme à lignes tendues, ladite plate-forme prenant la forme d'un flotteur ballastable et déballastable,
cette installation étant remarquable en ce que ledit flotteur comprend au moins un caisson à section horizontale sensiblement triangulaire, ledit caisson étant raccordé à des corps morts reposant sur un fond marin, par au moins trois paires de tendons, chaque paire étant installée entre un des angles dudit caisson et un desdits corps morts.

Dans cette installation, la forme de caisson à section horizontale triangulaire est simple et est celle qui permet de conférer au flotteur sa nécessaire stabilité avec un nombre minimal de points d'ancrage, à savoir 3, ce nombre de points d'ancrage minimisant celui des tendons, et donc le coût de ceux-ci.

Par ailleurs, la forme triangulaire du caisson améliore la flottabilité du flotteur en phase de construction et d'installation, par diminution du tirant d'eau.

Cette forme permet aussi, avantageusement, d'éloigner les tendons de l'axe vertical du flotteur, ce qui améliore la stabilité après installation et assure des économies complémentaires.

Suivant d'autres caractéristiques optionnelles de la présente invention :
- le flotteur comprend des moyens de stabilisation de ce flotteur quand il passe d'une position de flottaison à la surface de l'eau à une position où il est entièrement immergé,
- ces moyens de stabilisation sont constitués par un deuxième caisson solidaire du premier et installé entre celui-ci et la base d'une colonne de support de l'éolienne, l'inertie de la surface de la section horizontale du deuxième caisson étant intermédiaire entre celle de la section horizontale du premier caisson et celle de la base de la colonne.

La présente invention a aussi pour but de fournir un procédé pour la construction et la mise en place d'une telle installation, selon les étapes suivantes :
a) on construit le flotteur en cale sèche et on l'entraîne ensuite, par mise en flottaison et remorquage, à quai,
b) on installe l'éolienne sur le support depuis ledit quai,
c) on remorque l'ensemble ainsi constitué sur son site d'exploitation final, préalablement équipé de lignes immergées fixées chacune par une extrémité au fond marin et maintenues dans une position verticale,
d) on ballaste le flotteur au droit desdites lignes immergées pour le faire descendre sous la surface de l'eau jusqu'au niveau des extrémités hautes des lignes,
e) on raccorde lesdites extrémités au flotteur, et
f) on déballaste le flotteur jusqu'à établir une tension prédéterminée dans les lignes.

D'autres caractéristiques et avantages de la présente invention apparaîtront à la lecture de la description qui va suivre et à l'examen du dessin annexé dans lesquels :
- la figure 1 est une vue en perspective d'une installation de production d'électricité en mer suivant la présente invention, et
- les figures 2A à 2J illustrent schématiquement des étapes successives de la construction et de la mise en place de l'installation représentée à la figure 1.

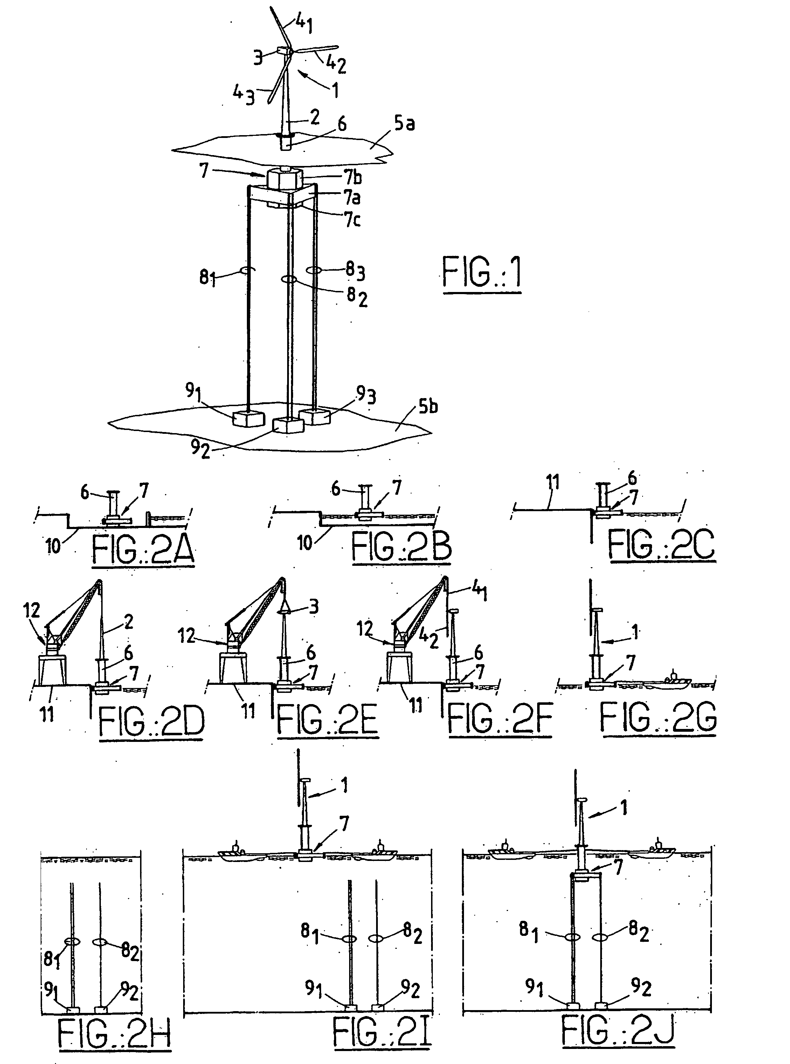

On se réfère à la figure 1 du dessin annexé où l'on a représenté schématiquement une éolienne 1 comprenant une colonne verticale 2 supportant un groupe 3 de production d'électricité constitué d'une génératrice électrique dont le rotor est entraîné en rotation par des pales 4₁, 4₂, 4₃ mises en mouvement par le vent, comme cela est bien connu.

La colonne 2 et les pales 4ᵢ sont dimensionnées en longueur de manière que ces pales puissent tourner largement au-dessus de la surface 5a d'un site marin dont le fond est référencé 5b.

La colonne 2 de support du groupe 3 est fixée sur un fût 6 débordant verticalement d'un support 7 et constituant la base de cette colonne.

Comme cela apparaît sur la figure 1, suivant l'invention, ce support 7 est constitué par une plate-forme submersible constituée par un flotteur, à flottabilité positive, maintenu à une distance prédéterminée de la surface 5a de l'eau, par des paires de lignes tendues 8ᵢ (i de 1 à 3) raccordées chacune par une extrémité au flotteur et, par son autre extrémité, à un corps mort 9ᵢ reposant sur le fond marin 5b.

Ces lignes tendues, ou "tendons", peuvent être constitués chacune par un câble ou un tube métallique de diamètre convenable.

Avantageusement, les extrémités haute et basse de chaque tendon sont articulées par des moyens connus, non représentés, sur le flotteur et sur le corps mort respectivement, auxquels elles sont raccordées.

On comprend que l'invention rend possible l'installation d'une éolienne sur des fonds marins de profondeur supérieure à celle pour laquelle l'installation sur "jacket" devient de coût prohibitif, et ceci par simple ajustement de la longueur des tendons.

Suivant le mode de réalisation du flotteur 7 représenté à la figure 1, celui-ci comprend essentiellement des premier et deuxième caissons prismatiques 7a, 7b respectivement, ballastables et déballastables, à section horizontale respectivement triangulaire et octogonale, les deux caissons étant accolés sur un axe vertical commun, le caisson 7a se situant en-dessous du caisson 7b.

Un compartiment de lest 7c est fixé en-dessous du compartiment 7a.

Comme représenté sur la figure 1, les paires de tendons 8ᵢ sont connectées chacune entre un des angles du caisson à section horizontale triangulaire 7a et le corps mort 9ᵢ correspondant.

Suivant une caractéristique du flotteur de l'installation selon l'invention, exploitée lors de la mise en place de l'installation sur son site final comme expliqué dans la suite de la présente description en liaison avec la figure 2, ce flotteur est configuré de manière à comprendre des moyens de stabilisation lorsqu'on ballaste celui-ci pour le faire passer d'une position de flottaison à la surface 5a de l'eau, à la position immergée représentée à la figure 1.

On sait en effet que la stabilité d'un corps flottant est tributaire, entre autres, du rayon métacentrique de ce corps, lui-même directement proportionnel à l'inertie de la surface de la section du corps par le plan de la surface de l'eau.

Lors de la descente du flotteur par ballastage, le "toit" du caisson 7a vient à passer sous la surface de l'eau. Il faut qu'à ce moment, la surface et l'inertie de la section du flotteur soit telle que la stabilité du flotteur soit assurée.

Le caisson 7b du flotteur suivant l'invention a justement pour but d'assurer cette stabilité grâce à la surface, et donc à l'inertie, importante de sa section horizontale (bien que moindre que celle du caisson 7a).

C'est ainsi que le flotteur 7 peut passer par ballastage, d'une position de flottaison à une position entièrement immergée (l'inertie à prendre alors en compte est celle, encore moindre, de la section horizontale du fût 6, à la base de la colonne 2), sans passage dangereux par un état d'instabilité hydrostatique qui pourrait provoquer un renversement du flotteur et de sa charge constituée par l'éolienne. On comprendra l'intérêt de cette disposition à la lecture de la description qui va suivre du procédé de mise en place de l'installation suivant l'invention.

Bien entendu, on pourrait donner au flotteur une forme autre que celle représentée, conique ou pyramidale par exemple, pour assurer sa stabilité pendant son immersion.

Cependant, la forme en deux caissons, à section triangulaire et octogonale respectivement, représentée à la figure 1 autorise une fabrication par assemblage de panneaux plats, simple et économique, conformément à l'un des buts fixés à la présente invention.

Dans cet esprit de réduction de coût on remarquera que la forme du caisson 7a, à section horizontale triangulaire, est celle qui permet de conférer au flotteur 7 sa nécessaire stabilité avec un nombre minimal de points d'ancrage, à savoir 3, ce nombre de points d'ancrage minimisant celui des tendons 8ᵢ et donc le coût de ceux-ci.

Par ailleurs, la forme triangulaire du caisson 7a améliore la flottabilité du flotteur en phase de construction et d'installation, par diminution du tirant d'eau.

Cette forme permet aussi, avantageusement, d'éloigner les tendons de l'axe vertical du flotteur, ce qui améliore la stabilité après installation et assure des économies complémentaires.

On se réfère maintenant aux figures 2A à 2J du dessin annexé, qui illustrent diverses phases successives du procédé suivant l'invention, de construction et de mise en place de l'installation décrite ci-dessus.

On construit d'abord en cale sèche 10 le flotteur 7, qui porte le fût 6 destiné à accueillir la base de la colonne 2 de l'éolienne 1 (voir fig. 2A).

Après mise en flottaison du flotteur 7 par mise en eau de la cale (fig. 2B) ce flotteur est remorqué jusqu'à un quai 11 (voir fig. 2C) où, grâce à une grue 12, on installe successivement, la colonne 2 sur le fût 6 (fig. 2D), le groupe 3 en haut de la colonne (fig. 2E), et les pales 4ᵢ sur le rotor du groupe (fig. 2F).

On remarquera que la forme triangulaire de la section horizontale du caisson 7 permet d'accoler un bord droit de ce caisson au quai 11 (voir fig. 2C) et donc de rapprocher le centre de gravité de l'installation à assembler de celui de la grue de chargement 12 (voir fig. 2D) ce qui permet avantageusement de limiter le couple appliqué sur la flèche de la grue.

On remorque ensuite (fig. 2G) l'installation jusqu'à son site final (fig. 2H), préalablement équipé des corps morts 9ᵢ et des tendons nécessaires à la fixation de l'installation sur ce site (fig. 2I), ces tendons étant maintenus en position verticale, éventuellement par des moyens connus tels que des bouées (non représentées).

Après avoir amené des angles du caisson triangulaire 7a du flotteur au droit des paires de tendons 8ᵢ auxquels ils doivent être raccordés, on immerge progressivement le flotteur 7 par ballastage (avec de l'eau de mer), jusqu'à permettre la connexion des extrémités hautes des tendons 8ᵢ à ce flotteur (fig. 2J).

Cette connexion étant réalisée, on met les tendons 8ᵢ sous une tension prédéterminée, par un déballastage mesuré du flotteur 7, pour assurer la stabilité de la position du flotteur et de l'éolienne.

Des essais en bassin ont montré que la présente invention permet de construire et de mettre en place une installation très stable de production d'électricité en mer, sur des lignes tendues.

C'est ainsi qu'avec une éolienne de 2 MW de puissance électrique montée sur une colonne de 30 m de hauteur et dont le poids total est d'environ 200 tonnes, on maintient dans les conditions d'environnement les plus sévères la verticalité d'une installation suivant l'invention, d'un poids total de 8000 tonnes, avec un écart inférieur à 0,4°, considéré comme satisfaisant.

Il apparaît maintenant que l'invention permet bien d'atteindre les buts fixés, à savoir fournir une installation de production d'électricité en mer pouvant être mise en place sur des sites de profondeur importante, de 100 m ou plus, et ceci de manière économique grâce à un support simplement monté sur des lignes tendues.

L'assemblage à quai de l'éolienne et de son support, plutôt qu'en pleine mer, renforce encore cet avantage économique.

A cet égard on notera en outre qu'il devient possible de ramener à quai une installation, par remise en flottaison et remorquage, pour l'exécution d'opérations de maintenance.

De telles opérations coûtent, elles aussi, moins cher quand elles sont exécutées dans ces conditions plutôt qu'en pleine mer.

Bien entendu l'invention n'est pas limitée au mode de réalisation décrit et représenté qui n'a été donné qu'à titre d'exemple.

C'est ainsi que l'ancrage du flotteur pourrait être assuré par des ancrages à succion ou par d'autres moyens d'ancrage connus, plutôt que par des corps morts.

## Revendications

1. Installation de production d'électricité en mer, comprenant une éolienne (1) et un support pour cette éolienne, ledit support étant constitué par une plate-forme (7) à lignes tendues (8ᵢ), ladite plate-forme (7) prenant la forme d'un flotteur ballastable et déballastable,
**caractérisée en ce que** ledit flotteur (7) comprend au moins un caisson (7a) à section horizontale sensiblement triangulaire, ledit caisson (7a) étant raccordé à des corps morts (9ᵢ) reposant sur un fond marin (5a), par au moins trois paires (8ᵢ) de tendons, chaque paire étant installée entre un des angles dudit caisson (7a) et un desdits corps morts (9ᵢ).

2. Installation conforme à la revendication 1, **caractérisée en ce que** ledit flotteur (7) comprend des moyens (7b) de stabilisation de ce flotteur quand il passe d'une position de flottaison à la surface de l'eau à une position où il est entièrement immergé.

3. Installation conforme à la revendication 2, **caractérisé en ce que** lesdits moyens de stabilisation sont constitués par un deuxième caisson (7b) solidaire du premier (7a) et installé entre celui-ci et la base d'une colonne (2) de support de ladite éolienne (1), l'inertie de la surface de la section horizontale dudit deuxième caisson (7b) étant intermédiaire entre celle de la section horizontale dudit premier caisson (7a) et celle de la base de ladite colonne (2).

4. Installation conforme à la revendication 3, **caractérisée en ce que** ladite colonne est montée sur un fût (6) débordant verticalement du flotteur (7).

5. Installation conforme à l'une quelconque des revendications 1 à 4, **caractérisée en ce qu'**un lest (7c) est fixé sous ledit flotteur (7).

6. Installation conforme à l'une quelconque des revendications 1 à 5, **caractérisée en ce que** les extrémités basses et hautes desdits tendons (8ᵢ) sont articulées sur lesdits corps morts (9ᵢ) et sur ledit flotteur (7), respectivement.

7. Installation conforme à la revendication 1, **caractérisé en ce que** ledit flotteur est de forme conique ou pyramidale.

8. Procédé de construction et de mise en place de l'installation conforme à l'une quelconque des revendications 1 à 7, **caractérisé par** les étapes suivantes :
a) on construit le flotteur (7) en cale sèche et on l'entraîne ensuite, par mise en flottaison et remorquage, à quai,
b) on installe l'éolienne (1) sur ledit flotteur (7), depuis ledit quai,
c) on remorque l'ensemble ainsi constitué sur son site d'exploitation final, préalablement équipé de lignes immergées (8ᵢ) maintenues dans une position verticale,
d) on ballaste ledit flotteur (7) au droit desdites lignes (8ᵢ) immergées pour le faire descendre sous la surface (5a) de l'eau jusqu'au niveau des extrémités hautes desdites lignes (8ᵢ),
e) on raccorde lesdites extrémités audit flotteur (7), et
f) on déballaste ledit flotteur (7) jusqu'à établir une tension prédéterminée dans lesdites lignes (8ᵢ).

## Patentansprüche

1. Offshore-Energiekraftwerk, welches eine Windkraftmaschine (1) und eine Auflage für die Windkraftmaschine umfasst, wobei die Auflage aus einer Plattform (7) mit gespannten Leitungen (8₁) besteht, wobei die Plattform (7) die Form eines ballastierbaren und deballastierbaren Schwimmkörpers aufweist, **dadurch gekennzeichnet, dass** der Schwimmkörper (7) mindestens einen Kasten (7a) mit einem im Wesentlichen dreieckigen horizontalen Querschnitt umfasst, wobei der Kasten (7a) mit Vertäubojen (9₁), die auf dem Meeresboden (5a) aufliegen, über mindestens drei Paar (8₁) Spannkabel verbunden ist, wobei jedes Paar zwischen einem der Winkel des Kastens (7a) und einer der Vertäubojen (9₁) angeordnet ist.

2. Kraftwerk nach Anspruch 1, **dadurch gekennzeichnet, dass** der Schwimmkörper (7) Mittel (7b) zum Stabilisieren des Schwimmkörpers umfasst, wenn der Schwimmkörper von einer Schwimmposition auf der Wasseroberfläche auf eine Position übergeht, in der er vollkommen unter Wasser ist.

3. Kraftwerk nach Anspruch 2, **dadurch gekennzeichnet, dass** die Mittel zum Stabilisieren aus einem zweiten Kasten (7b) bestehen, der mit dem ersten (7a) einstückig und zwischen diesem und der Basis einer Stützsäule (2) der Windkraftmaschine (1) angeordnet ist, wobei die Trägheit der Oberfläche des horizontalen Querschnitts des zweiten Kastens (7b) zwischen jener des horizontalen Abschnitts des ersten Kastens (7a) und jener der Basis der Säule (2) liegt.

4. Kraftwerk nach Anspruch 3, **dadurch gekennzeichnet, dass** die Säule auf einem Schaft (6) befestigt ist, der vertikal vom Schwimmkörper (7) vorsteht.

5. Kraftwerk nach einem der Ansprüche 1 bis 4, **dadurch gekennzeichnet, dass** ein Ballast (7c) unter dem Schwimmkörper (7) befestigt ist.

6. Kraftwerk nach einem der Ansprüche 1 bis 5, **dadurch gekennzeichnet, dass** die unteren und oberen Enden der Spannkabel (8₁) auf den Vertäubojen (9₁) bzw. auf dem Schwimmkörper (7) gelenkig angebracht sind.

7. Kraftwerk nach Anspruch 1, **dadurch gekennzeichnet, dass** der Schwimmkörper eine konische Form oder Pyramidenform aufweist.

8. Verfahren zur Errichtung und zum Aufbau des Kraftwerks nach einem der Ansprüche 1 bis 7, wobei das Verfahren durch folgende Schritte **gekennzeichnet** ist:
a) Errichten des Schwimmkörpers (7) im Trockendock und anschließendes Transportieren des Schwimmkörpers zum Kai durch In-Wasser-Bringen und Schleppen,
b) Aufbauen der Windkraftmaschine (1) auf dem Schwimmkörper (7) vom Kai aus,
c) Schleppen der gesamten, auf diese Weise errichteten Vorrichtung zu deren endgültigem Einsatzort, wobei die Vorrichtung zuvor mit eingetauchten Leitungen (8₁) versehen wird, die in einer vertikalen Position gehalten werden,
d) Ballastieren des Schwimmkörpers (7) auf der rechten Seite der eingetauchten Leitungen (8₁), um den Schwimmkörper unter die Wasseroberfläche (5a) bis zur Höhe der oberen Enden der Leitungen (8₁) abzusenken,
e) Verbinden der Enden mit dem Schwimmkörper (7) und
f) Deballastieren des Schwimmkörpers (7) bis eine vorbestimmte Spannung in den Leitungen (8₁) erreicht worden ist.

## Claims

1. Offshore electricity production installation, comprising a wind turbine (1) and a support for said wind turbine, said support comprising a platform (7) with taut mooring lines (8ᵢ), said platform (7) taking the form of a buoy adapted to be ballasted and deballasted,
**characterized in that** said buoy (7) comprises at least one caisson (7a) of substantially triangular horizontal section, said caisson (7a) being connected to deadweight anchors (9ᵢ) resting on a seabed (5a) by at least three pairs (8ᵢ) of tension members, each pair being installed between one of the corners of said caisson (7a) and one of said deadweight anchors (9ᵢ).

2. Installation according to claim 1, **characterized in that** said buoy (7) comprises means (7b) for stabilizing said buoy when it moves from floating on the surface of the water to being entirely submerged.

3. Installation according to claim 2, **characterized in that** said stabilizing means comprise a second caisson (7b) attached to the first (7a) and installed between the latter and the base of a column (2) supporting said wind turbine (1), the moment of inertia of the area of the horizontal section of said second caisson (7b) being between that of the horizontal section of said first caisson (7a) and that of the base of said column (2).

4. Installation according to claim 3, **characterized in that** said column is mounted on a shaft (6) projecting vertically from the buoy (7).

5. Installation according to any of claims 1 to 4, **characterized in that** a ballast weight (7c) is fixed under said buoy (7).

6. Installation according to any of claims 1 to 5, **characterized in that** the bottom and top ends of said tension members (8ᵢ) are articulated to said deadweight anchors (9ᵢ) and to said buoy (7), respectively.

7. Installation according to claim 1, **characterized in that** said buoy is of conical or pyramidal shape.

8. Method of constructing and installing the installation according to any of claims 1 to 7, **characterized by** the following steps:
a) the buoy (7) is constructed in dry dock and then floated and towed to a quayside,
b) the wind turbine (1) is installed on said buoy (7) from said quayside,
c) the resulting assembly is towed to its site of final use, pre-equipped with submerged lines (8ᵢ) maintained in a vertical position,
d) said buoy (7) is ballasted in line with said submerged lines (8ᵢ) to cause it to descend beneath the surface (5a) of the water as far as the upper ends of said lines (8ᵢ),
e) said ends are connected to said buoy (7), and
f) said buoy (7) is deballasted until a predetermined tension is established in said lines (8ᵢ).
